# EUROPEAN PATENT APPLICATION

(11) **EP 4 394 714 A1**
(43) Date of publication of application: **03.07.2024**
(21) Application number: 22880301.1
(22) Date of filing: 11.10.2022
(51) Int. Cl.: G06T 17/00

(54) **MODEL ESTABLISHMENT METHOD AND RELATED APPARATUS**

(30) Priority: 15.10.2021 CN 202111205441
(71) Applicant: Huawei Technologies Co., Ltd., Shenzhen, Guangdong 518129 (CN)
(72) Inventor: LI, Zhenpeng, Shenzhen, Guangdong 518129 (CN); ZHOU, Zhen, Shenzhen, Guangdong 518129 (CN); LUO, Bei, Shenzhen, Guangdong 518129 (CN); CHEN, Pengwei, Shenzhen, Guangdong 518129 (CN)
(74) Representative: Maiwald GmbH
(86) International application number: PCT/CN2022/124626
(87) International publication number: WO 2023/061364

(57) **Abstract**

A model establishment method and a related apparatus are provided. The method includes: obtaining projected coordinates of N vertices that are in an original model and that are projected on a target plane; determining M vertices from the N vertices, where m is a positive integer greater than or equal to 3 and less than or equal to N; and establishing, based on projected coordinates of the M vertices and height information of the original model, a proxy model corresponding to the original model. The proxy model of the original model may be established by using the foregoing technical solution. In comparison with the original model, the proxy model retains details of the original model, but includes fewer vertices, which simplifies a structure. In this case, in some scenarios (for example, collision detection, occlusion culling, or shadow drawing) in which an image does not need to be rendered by using a model, the proxy model with the simpler structure may be used to replace the original model. In this way, a calculation amount can be reduced, application running efficiency can be improved, and user experience can be improved.

## Description

This application claims priority to Chinese Patent Application No. 202111205441.1, filed with the China National Intellectual Property Administration on October 15, 2021 and entitled "MODEL ESTABLISHMENT METHOD AND RELATED APPARATUS", which is incorporated herein by reference in its entirety.

### TECHNICAL FIELD

Embodiments of this application relate to the field of computer graphics, and more specifically, to a model establishment method and a related apparatus.

### BACKGROUND

Rendering (render) is a process of generating an image from a model by using software. The model is a description of a three-dimensional object that is strictly defined by using a language or a data structure, and includes information such as geometry, viewpoint, texture, lighting, or shadow. The image is a digital image or a bitmap image. A rendering process is a process of adding bitmap textures or program textures, lighting, concave-convex texture mapping, and positions relative to other objects on the basis of the model, to obtain a result of a complete image that may be viewed by a user or an observer.

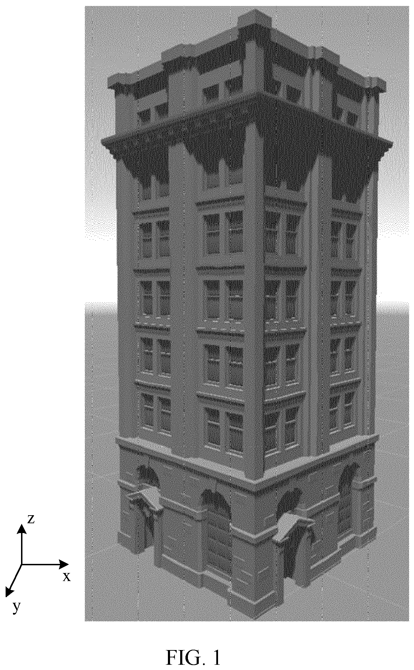

To render and obtain a realistic three-dimensional object, the model requires a large quantity of vertices and triangular facets. FIG. 1 is used as an example. To render and obtain a building shown in FIG. 1, 18709 vertices and 11748 triangular facets are required.

However, in some scenarios, a model of a three-dimensional object is not completely used to render and obtain an image for the user or the observer to view. In these scenarios, if a model used to generate an image is further applied, a load on hardware is increased. Therefore, how to simplify the model of the three-dimensional object to adapt to different application scenarios is an urgent problem to be resolved.

### SUMMARY

Embodiments of this application provide a model establishment method and a related apparatus, to establish a proxy model used to replace an original model, so as to facilitate subsequent application.

According to a first aspect, an embodiment of this application provides a model establishment method, including: obtaining N coordinates, where the N coordinates are projected coordinates of N vertices that are in an original model and that are projected on a target plane, and N is a positive integer greater than or equal to 3; determining M vertices from the N vertices based on the N coordinates, where M is a positive integer greater than or equal to 3 and less than or equal to N; and establishing, based on the projected coordinates of the M vertices and height information of the original model, a proxy model corresponding to the original model.

The proxy model of the original model may be established by using the foregoing technical solution. In comparison with the original model, the proxy model retains details of the original model, but includes fewer vertices, which simplifies a structure. In this case, in some scenarios (for example, collision detection, occlusion culling, or shadow drawing) in which an image does not need to be rendered by using a model, the proxy model with the simpler structure may be used to replace the original model. In this way, a calculation amount can be reduced, application running efficiency can be improved, and user experience can be improved.

With reference to the first aspect, in a possible implementation of the first aspect, the obtaining N coordinates includes: determining a plurality of candidate vertices based on the projected coordinates of the vertices that are in the original model and that are projected on the target plane, where projected coordinates of each of the plurality of candidate vertices projected on the target plane are located in a reference area, and the reference area is an area in which a preset proportion of vertices in the original model are projected on the target plane; determining the N vertices from the plurality of candidate vertices; and determining the projected coordinates of the N vertices projected on the target plane.

Vertices outside the reference area are usually protruding parts of the object, and deleting these vertices has little impact on a function of the proxy model, but the proxy model with the simpler structure can be obtained.

In addition, the foregoing technical solutions may further improve effect of some applications. For example, a protruding part of a building A blocks a building B. In this way, when the original model of the building A is used for occlusion culling, the building B is determined to be occluded by the building A. In this case, to reduce the calculation amount, the model of the building B is not rendered. However, after an angle of view changes, the building B is completely or partially exposed, but the model of the building B is not rendered. In this way, the building B does not appear in an image, and user experience is greatly affected. The vertices of the protruding part of the original model are deleted from the proxy model in the foregoing technical solution. In this way, when the proxy model is used to perform occlusion culling, it is determined that the building B is not occluded. Therefore, the model of the building B is rendered, to avoid the foregoing problem.

With reference to the first aspect, in a possible implementation of the first aspect, the determining the N vertices from a plurality of candidate vertices includes: determining N groups of candidate vertices based on the projected coordinates of each of the plurality of candidate vertices projected on the target plane, where each group of candidate vertices in the N groups of candidate vertices includes at least one vertex, projected coordinates of any two candidate vertices that belong to a same group and that are projected on the target plane are the same, and projected coordinates of any two candidate vertices that belong to different groups and that are projected on the target plane are different; and determining the N vertices, where the N vertices respectively belong to the N groups of candidate vertices.

For a plurality of vertices with same projected coordinates, only one of the vertices is reserved in the foregoing technical solution. In this way, a quantity of vertices that are in the proxy model may be further reduced.

With reference to the first aspect, in a possible implementation of the first aspect, the N vertices are vertices with a maximum coordinate value in a reference direction of the N groups of candidate vertices, and the reference direction is a direction perpendicular to the target plane; and the height information of the original model is coordinate values of the M vertices in the reference direction.

With reference to the first aspect, in a possible implementation of the first aspect, the height information of the original model is height information of a bounding box, and all vertices in the original model are located in the bounding box.

With reference to the first aspect, in a possible implementation of the first aspect, the determining M vertices from the N vertices based on the N coordinates includes: traversing the N vertices based on the N coordinates, and deleting an abnormal vertex from the N vertices to obtain the M vertices, where an angle of an included angle between a first reference line and a second reference line is greater than a preset angle, the first reference line is a connection line between the abnormal vertex and a first adjacent point, the second reference line is a connection line between the abnormal vertex and a second adjacent point, and the first adjacent point and the second adjacent point are two vertices that are located on two sides of the abnormal vertex and adjacent to the abnormal vertex in the N vertices.

According to the foregoing technical solution, a quantity of vertices that are in the proxy model may be further reduced. In addition, when a proper preset angle is selected, a quantity of abnormal vertices that need to be deleted and the similarity between the proxy model and the original model can be controlled. For example, a smaller preset angle indicates a larger quantity of abnormal vertices that need to be deleted, and a smaller quantity of vertices that are in the proxy model, but a smaller similarity between the proxy model and the original model. A larger preset angle indicates a smaller quantity of vertices that need to be deleted, and a larger quantity of in the proxy model, but a larger similarity between the proxy model and the original model. The higher the similarity between the proxy model and the original model, the closer the structure of the proxy model to the original model. The lower the similarity between the proxy model and the original model, the greater the difference between the proxy model and the original model. The purpose of generating the proxy model is to replace the original model with a complex structure. The closer the structure of the proxy model to the original model, the poorer the effect of saving hardware resources. On the contrary, if the structure of the proxy model is simpler than that of the original model, the effect of decompressing hardware resources is better. However, if the structure difference between the proxy model and the original model is excessively large, the details of the original model cannot be reserved, which is unfavorable for subsequent application. Therefore, when a proper preset angle is selected, details of the original model can be reserved, and a hardware resource can be saved.

With reference to the first aspect, in a possible implementation, the establishing, based on the projected coordinates of the M vertices and height information of the original model, a proxy model corresponding to the original model includes: determining, based on the projected coordinates of the M vertices and the height information of the original model, coordinates of M top vertices located on a top plane of the proxy model and coordinates of M bottom vertices located on a bottom plane of the proxy model; and determining a vertex index based on the coordinates of the M top vertices and the coordinates of the M bottom vertices, where the vertex index is used to record a connection sequence of vertices in the proxy model, and the proxy model includes the coordinates of the M top vertices, the coordinates of the M bottom vertices, and the vertex index.

The vertex index may include a top plane index, a bottom plane index, and a side plane index. The top plane index is used to record a connection sequence of vertices on the top plane, the bottom plane index is used to record a connection sequence of vertices on the bottom plane, and the side plane index is used to record a connection sequence of vertices on the side plane.

The top plane index may be determined based on the coordinates of the M top vertices. The bottom plane index may be determined based on the coordinates of the M bottom vertices. The side plane index may be determined based on the coordinates of the M top vertices and the coordinates of the M bottom vertices.

According to a second aspect, an embodiment of this application provides a computer device. The computer device includes units configured to implement the method according to the first aspect or any one of the possible implementations of the first aspect.

According to a third aspect, an embodiment of this application provides a computer device. The computer device includes a processor. The processor may be coupled to a memory, and read and execute instructions and/or program code in the memory, to perform the method according to the first aspect or any one of the possible implementations of the first aspect.

According to a fourth aspect, an embodiment of this application provides a chip system, including a logic circuit. The logic circuit may be coupled to an input/output interface, and transmit data through the input/output interface, to perform the method according to the first aspect or any one of the possible implementations of the first aspect.

According to a fifth aspect, an embodiment of this application provides a computer-readable storage medium, where the computer-readable storage medium stores program code, and when the computer storage medium is run on a computer, the computer is enabled to perform the method according to the first aspect or any one of the possible implementations of the first aspect.

According to a sixth aspect, an embodiment of this application provides a computer program product, where the computer program product includes computer program code, and when the computer program code is run on a computer, the computer is enabled to perform the method according to the first aspect or any one of the possible implementations of the first aspect.

### BRIEF DESCRIPTION OF DRAWINGS

FIG. 1 is a diagram of a building;
FIG. 2 is a schematic diagram of occlusion culling;
FIG. 3 is a schematic flowchart of a model establishment method according to an embodiment of this application;
FIG. 4 is a schematic diagram in which vertices in an original model are projected on a target plane;
FIG. 5 is a schematic diagram of a process of deleting an abnormal vertex;
FIG. 6 is a schematic diagram of a proxy model;
FIG. 7 is a schematic flowchart of an application scenario to which a model establishment method according to an embodiment of this application is applied;
FIG. 8 is a proxy model that corresponds to an original model shown in FIG. 1 and that is generated according to the method shown in FIG. 3; and
FIG. 9 is a schematic diagram of a computer device according to an embodiment of this application.

### DESCRIPTION OF EMBODIMENTS

The following describes technical solutions in embodiments of this application with reference to accompanying drawings.

To help a person skilled in the art better understand the technical solutions in this application, some concepts used in this application are first described.

### 1. Bounding box (bounds)

A bounding box is an algorithm for solving optimal bounding space of a discrete point set. A basic idea is to replace a complex geometric object with a geometry (referred to as a bounding box) with a large volume and simple characteristics. Common bounding box algorithms include an axis aligned bounding box (Axis Aligned Bounding Box, AABB), a bounding sphere (Bounding Sphere), and an oriented bounding box (Oriented Bounding Box, OBB).

### 2. Mesh (mesh)

A mesh is a series of triangular facets, including vertex coordinate data, index coordinate data, normal line data, texture coordinates (also referred to as UV coordinates), and the like. The vertex coordinate data stores coordinates that are of all spatial points required by a model and that are generally three-dimensional. Then, an index is generated for each spatial point. Every three indexes are grouped to form index coordinates, that is, three spatial points are selected to form a triangle. The index coordinate data describes composition of all triangular facets in the model. The normal line data specifies a normal line direction of each vertex. The UV coordinates specify a position of the mesh to which a map is attached.

### 3. Model (model)

Unless otherwise specified, a model in this specification refers to a three-dimensional model. The three-dimensional model may be used in a scenario such as an animation or a game. The model may be divided into two parts: a mesh and a map. The mesh is formed by splicing a series of triangular facets, and is equivalent to a "skeleton" of the model. The map includes a texture image and a lighting map of the model, and is equivalent to a "skin" of the model.

In addition, unless otherwise specified, a scene, an object, a building, and the like in embodiments of this application are three-dimensional.

### 4. Shader (shader)

A shader is an applet running on a GPU. These applets run for a specific part of a graphics render pipeline. In a basic sense, the shader is only a program that converts input into output. Different shaders are used in different processing parts of the render pipeline.

### 5. Occlusion culling

Occlusion culling is a model of removing an object occluded by an obstruction in a scene. In this way, when the scene is rendered, only a model of an object that may be seen by an observer may be rendered. In this way, a data transmission amount from a central processing unit (central processing unit, CPU) to a graphics processing unit (graphics processing unit, GPU) can be reduced, and a calculation amount in vertex shader and fragment shader stages can also be reduced, and finally a quantity of visible objects at any given moment can be reduced. Therefore, an objective of optimizing performance and reducing GPU load can be achieved.

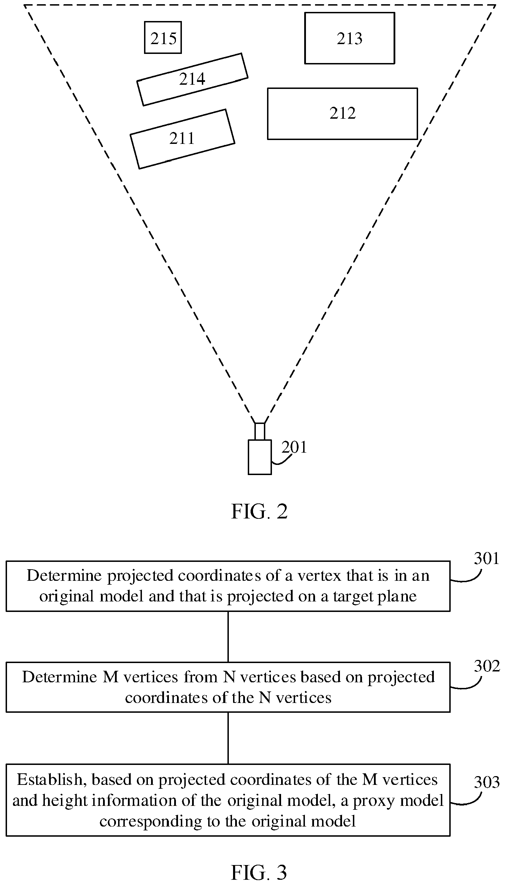

FIG. 2 is a schematic diagram of occlusion culling. As shown in FIG. 2, a viewing frustum range of a camera 201 includes five buildings, which are respectively a building 211, a building 212, a building 213, a building 214, and a building 215. If an observer is located at a position of the camera 201, the observer may not see the building 215 and the building 213 that are occluded. Therefore, when a scene shown in FIG. 2 is rendered, only buildings that may be seen by the observer, that is, the building 211, the building 212, and the building 214, may be rendered.

### 6. Collision detection

Collision detection is determining whether objects intersect with each other (or include or overlap each other), calculating a focus, predicting an intersection moment, and the like.

For example, in a three-dimensional game, the collision detection may be used to implement smooth movement of a person in a scene. When the person reaches a step with a height within a specific range, the person may automatically move up, but an excessively high step blocks the person. When the person reaches a slope with a small slope, the person may move up, but a slope with an excessively large slope blocks the person.

### 7. Collider (collider)

A collider may be used to define a shape of a collision object, to implement the collision detection. Common colliders include box collider, spherical collider, capsule collider, composite collider, mesh collider, static collider, and the like.

### 8. Shadow

To better simulate a real scenario, a shadow of an object is drawn when a scene is rendered. The shadow of the object may be implemented by using a technology of shadow volumes (shadow volumes). Shadow volumes is a technology based on geometry. It requires a contour of the object in a specific direction of light to generate a closed volume. Then, a shadow part of the object in the scene may be determined by ray casting.

In an application such as occlusion culling, collision detection, or shadow generation, a model of an object plays an auxiliary role, not used for rendering. Therefore, in these applications, a model for generating an image for an observer to view may not be required. For ease of differentiation, the model used to generate the image for the observer to view is referred to as an original model in the following descriptions, and the model that plays an auxiliary role in the application such as occlusion culling, collision detection, or shadow generation is referred to as a proxy model.

This application provides a model establishment method. In the method, a corresponding proxy model may be generated based on an original model of an object. In comparison with the original model, the proxy model has a simpler structure, but may still retain details of the original model. The following describes this embodiment of this application with reference to FIG. 1 and FIG. 3.

FIG. 3 is a schematic flowchart of a model establishment method according to an embodiment of this application. The method shown in FIG. 3 may be implemented by a computer device or a component (for example, a chip or a circuit) in the computer device. The computer device in this embodiment of this application may be a device such as a desktop computer, a laptop computer, a tablet computer, a server, a mobile phone, or a game console (for example, a play station (play station, PS) or a Nintendo switch (Nintendo switch, NS)). For ease of description, the following assumes that an original model in FIG. 3 is a model of the building shown in FIG. 1.

301: Determine projected coordinates of a vertex that is in the original model and that is projected on a target plane.

The target plane may be any plane. However, for ease of calculation, the target plane may be usually set as a bottom plane or a top plane of an object.

The projected coordinates of the vertex on the target plane may be obtained by using the following three solutions.

Solution 1: Determine projected coordinates of each vertex on the target plane.

In this case, the projected coordinates determined in step 301 may be projected coordinates of all vertices that are in the original model and that are on the target plane. It is assumed that the original model is a model used to render and obtain the building shown in FIG. 1. In this case, projected coordinates of 18709 vertices projected on the target plane need to be obtained.

Solution 2: Reserve only projected coordinates of one vertex in each group of vertices on the target plane.

Some vertices in the original model have same coordinates on the target plane, but have different coordinates in a direction perpendicular to the target plane. As shown in FIG. 1, it is assumed that the target plane is the bottom plane of the building, coordinates of some vertices on an x-y plane are the same, but coordinates in a z-axis direction are different. In this case, the vertices may be grouped based on the coordinates of the vertices, and each group of vertices includes one or more vertexes. If a group of vertices includes a plurality of vertices, coordinates of any two vertices in the group of vertices on the x-y plane are the same, but coordinates in the z-axis direction are different. Any two vertices that belong to different groups have different coordinates on the x-y plane. In this way, only projected coordinates of one vertex in each group of vertices on the target plane need to be determined. FIG. 1 is still used as an example. 18709 vertices may be divided into 2655 groups. In the case of solution 2, only 2655 projected coordinates need to be determined. In this way, computing resources required in subsequent steps can be greatly simplified.

Solution 3: Determine projected coordinates of vertices in a reference area.

The reference area is determined based on projected coordinates of all vertices that are in the original model and that are on the target plane, and projected coordinates of 95% of the vertices that are in the original model and that are on the target plane are located in the reference area. In this case, only the projected coordinates of the vertices of the projected coordinates in the reference area may be obtained. A manner of obtaining the projected coordinates of the vertices in the reference area may be the same as that in the foregoing solution 1. Alternatively, only projected coordinates of one vertex in a group of vertices with same projected coordinates may be reserved, which is the same as that in the foregoing solution 2.

It may be understood that the foregoing 95% is merely an example of a preset proportion. The preset proportion may alternatively be another value. For example, the preset proportion may be usually set to be greater than or equal to 90% and less than or equal to 98%.

Vertices outside the reference area are usually protruding parts of the object, and deleting these vertices has little impact on a function of the proxy model.

For ease of description, in the following descriptions, it is assumed that projected coordinates of N vertices are obtained in total in step 301, where N is a positive integer greater than or equal to 3.

302: Determine M vertices from the N vertices based on the projected coordinates of the N vertices, where M is a positive integer greater than or equal to 3 and less than or equal to N.

In some embodiments, the M vertices may be implemented by using the following steps.

Step 1: Determine a target vertex and two vertices (which may be respectively referred to as a first adjacent point and a second adjacent point) adjacent to the target vertex, where the target vertex may be any one of the N vertices.

Step 2: Determine a first reference line and a second reference line, where the first reference line is a connection line between the first adjacent point and the target vertex, and the second reference line is a connection line between the target vertex and the second adjacent point.

Step 3: Determine whether an angle of an included angle between the first reference line and the second reference line is greater than a preset angle. If the angle of the included angle is greater than the preset angle, it may be considered that the target vertex is an abnormal vertex, and the abnormal vertex may be deleted; or if the angle of the included angle is less than or equal to the preset angle, the target vertex may be reserved.

Step 4: Determine an adjacent point (for example, a first adjacent point) of the target vertex as a new target vertex, and then repeat steps 1 to 3 until all the N vertices are traversed. The finally reserved target vertices are the M vertices.

The preset angle may be set to be greater than 90 degrees, and may be usually set to be greater than or equal to 140 degrees and less than or equal to 150 degrees.

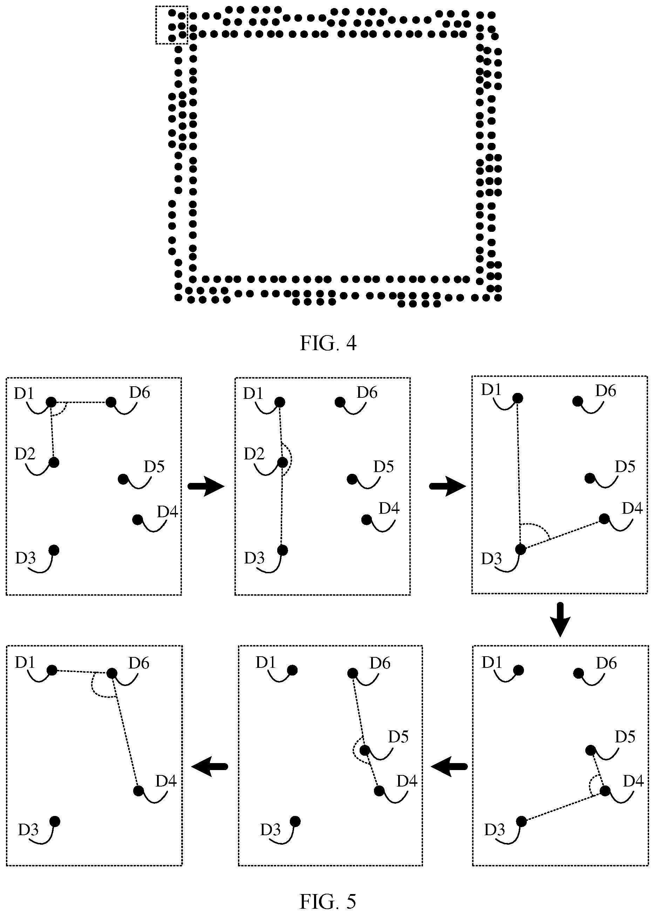

FIG. 4 is a schematic diagram in which vertices in an original model are projected on a target plane. The following uses six vertices in the upper left corner as an example to describe how to delete abnormal vertices. FIG. 5 is a schematic diagram of a process of deleting an abnormal vertex in the six vertexes in the upper left corner shown in FIG. 4. It is assumed that a preset angle is 145 degrees.

For ease of description, the six vertices may be respectively referred to as D1, D2, D3, D4, D5, and D6. L12 is used to represent a connection line between D1 and D2, L61 is used to represent a connection line between D6 and D1, L23 is used to represent a connection line between D2 and D3, and so on.

It is first assumed that D1 is a target vertex, and two vertices adjacent to D1 are respectively D2 and D6. An angle of an included angle between L61 and L12 is determined, and the angle is compared with the preset angle. It is clearly that the angle of the included angle between L61 and L12 is less than 145 degrees. In this case, D1 may be reserved.

A sequence of vertices may be determined according to a gift wrapping algorithm or another algorithm that is used to solve a convex hull problem. For example, in some embodiments, it is assumed that a ray starting from D1 scans in a 12 o'clock direction in an inverse time-shift direction. In a scanning process, a first vertex overlapping the ray is a vertex D2 adjacent to D1; the scanning continues, and a second vertex overlapping the ray is a vertex D3 adjacent to D2; and so on, until the sequence of all vertices is determined.

D2 continues to be used as a target vertex, and two vertices adjacent to D2 are respectively D1 and D3. An angle of an included angle between L12 and L23 is determined, and the angle of the included angle is compared with the preset angle. It is clearly that the angle of the included angle between L12 and L23 is greater than 145 degrees. In this case, it may be considered that D2 is an abnormal vertex, and D2 is deleted.

D3 continues to be used as a target vertex, and two vertices adjacent to D3 are respectively D1 and D4. An angle of an included angle between L13 and L34 is determined, and the angle is compared with the preset angle. It is clearly that the angle of the included angle between L13 and L34 is less than 145 degrees. In this case, D3 may be reserved.

D4 continues to be used as a target vertex, and two vertices adjacent to D4 are respectively D3 and D5. An angle of an included angle between L34 and L45 is determined, and the angle of the included angle is compared with the preset angle. It is clearly that the angle of the included angle between L34 and L45 is less than 145 degrees. In this case, D4 may be reserved.

D5 continues to be used as a target vertex, and two vertices adjacent to D5 are respectively D4 and D6. An angle of an included angle between L45 and L56 is determined, and the angle of the included angle is compared with the preset angle. It is clearly that the angle of the included angle between L45 and L56 is greater than 145 degrees. In this case, it may be considered that D5 is an abnormal vertex, and D5 is deleted.

D6 continues to be used as a target vertex, and two vertices adjacent to D6 are respectively D4 and D1. An angle of an included angle between L46 and L61 is determined, and the angle of the included angle is compared with the preset angle. It is clearly that the angle between L46 and L61 is less than 145 degrees. In this case, D6 may be reserved.

Through the foregoing steps, two abnormal vertices D2 and D5 included in D1 to D6 are deleted, to obtain four vertices D1, D3, D4, and D6.

303: Establish, based on the projected coordinates of the M vertices and height information of the original model, a proxy model corresponding to the original model.

The height information of the original model is height information perpendicular to the target plane. The height information may include a maximum height and a minimum height.

In some embodiments, the height information of the original model may be a height value of a bounding box of the original model. Before the projected coordinates of the vertex that is in the original model and that is projected on the target plane are determined, a bounding box may be first created, all vertices in the original model are traversed, and the bounding box is properly scaled, so that the bounding box includes all the vertices in the original model. In this case, height information of the bounding box may be recorded. The height information of the bounding box may be used as the height information of the original model. A maximum height of the bounding box is the maximum height of the original model, and a minimum height of the bounding box is the minimum height of the original model.

In some other embodiments, the maximum height in the height information of the original model may be height values of the M vertices. As described above, in step 301, in solution 2 and solution 3, only projected coordinates of one vertex in each group of vertices on the target plane are reserved. In this case, a height value of a vertex with a highest height value in each group of vertices may be further determined and stored. In this way, each of the N vertices obtained in step 301 further has a corresponding height value. Because the M vertices in step 302 are selected from the N vertices, each of the M vertices also has a corresponding height value. The minimum height in the height information of the original model may be considered as 0.

Data of three-dimensional coordinates of each of the M vertices may be determined based on the projected coordinates of the M vertices and the height information of the original model. Three-dimensional coordinates of the M vertices located on a top plane of the proxy model may be determined based on the projected coordinates of the M vertices and the maximum height in the height information of the original model. Projected coordinates of the three-dimensional coordinates of the M vertices located on the top plane of the proxy model are respectively the projected coordinates of the M vertices, and height values of the three-dimensional coordinates of the M vertices are the maximum height in the height information. Similarly, the three-dimensional coordinates of the M vertices located on a bottom plane of the proxy model may be determined based on the projected coordinates of the M vertices and the minimum height in the height information of the original model. Projected coordinates of three-dimensional coordinates of M vertices located on the bottom of the proxy model are respectively the projected coordinates of the M vertices, and height values of the three-dimensional coordinates of the M vertices are the minimum height in the height information.

The three-dimensional coordinates of the vertices obtained based on the height information need to be connected in a correct sequence to form a correct plane. Therefore, a vertex index also needs to be determined. The vertex index is used to record a connection sequence of each vertex. The vertex index may include a top plane index, a bottom plane index, and a side plane index. The top plane index is used to record a connection sequence of vertices on the top plane, the bottom plane index is used to record a connection sequence of vertices on the bottom plane, and the side plane index is used to record a connection sequence of vertices on the side plane. The proxy model corresponding to the original model may be constructed based on the coordinates of the vertices, the top plane index, the bottom plane index, and the side plane index.

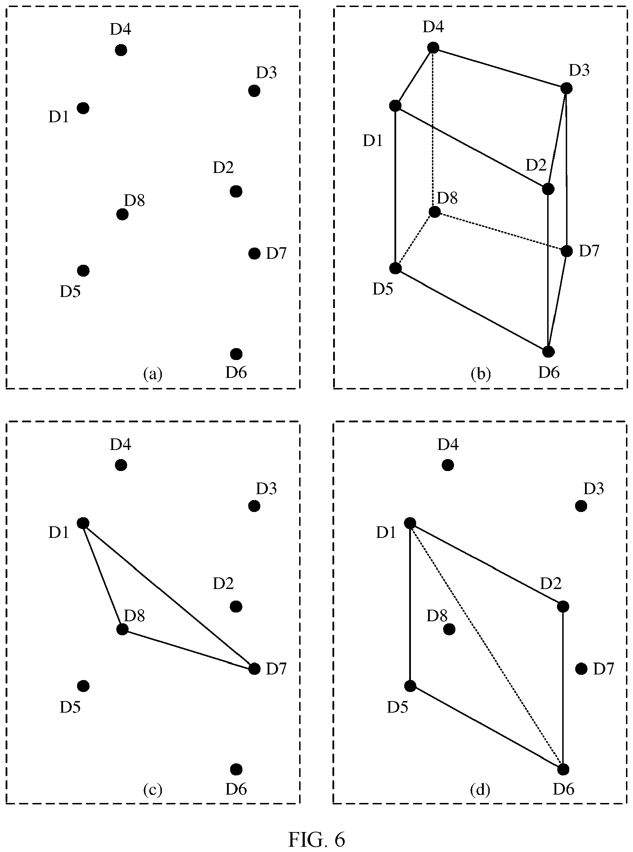

FIG. 6 is used as an example. In (a) in FIG. 6, D1, D2, D3, and D4 are four vertices that are located on the top plane and that are determined based on the projected coordinates and the height information, and D5, D6, D7, and D8 are four vertices that are located on the bottom plane and that are determined based on the projected coordinates and the height information. (b) in FIG. 6 shows a correct connection sequence of the eight vertices. (c) in FIG. 6 is a schematic diagram of incorrect connection on the side plane.

The top plane index may be determined according to a gift wrapping algorithm or another algorithm that is used to solve a convex hull problem. Four vertices on the top plane are used as an example. It is assumed that a ray starting from D1 scans in a 12 o'clock direction in an inverse time-shift direction. In a scanning process, a first vertex overlapping the ray is a vertex D2 adjacent to D1. The scanning continues, and a second vertex overlapping the ray is a vertex D3 adjacent to D2. The scanning continues, and a next vertex D4 is obtained. In this way, a connection sequence of D1 to D4, namely, the top plane index, is determined. A manner of determining the bottom plane index is the same as the manner of determining the top plane index. For brevity, details are not described herein again.

The following describes some manners of determining the side plane index. Three-dimensional coordinates of two vertices with the same projected coordinates on the top and bottom planes are different only in height coordinates. Therefore, the two vertices are associated. After the two associated vertices are determined, a next vertex may be found along a simplified direction of one of the vertices (for example, a downward direction of the vertex). A first triangular facet is first constructed. A second triangular facet is constructed with upper and lower associated vertices (one of which is the vertex found in the simplified direction in the previous step) and a bevel of the first triangular facet. In this way, two triangular facets form a side plane, so that a correct plane may be obtained. A triangular facet vertex index (vertex sequence) forms a final side plane index (a sequence of vertices on the side plane).

As shown in (d) in FIG. 6, projected coordinates of the vertex D1 and the vertex D5 are the same. Therefore, the vertex D1 and the vertex D5 are a pair of associated vertices. A simplified direction of the vertex D5 is a direction from D5 to D6. Therefore, it may be determined that a next vertex is the vertex D6. In this way, a triangular facet (referred to as a triangular facet 1 below) formed by vertices D1, D5, and D6 may be determined. The vertex D6 and the vertex D2 are a pair of associated vertices (that is, projected coordinates of the vertex D6 and the vertex D2 are the same). Another triangular facet (referred to as a triangular facet 2 below) may be formed by using the vertex D6, the vertex D2, and a bevel (namely, an edge from D1 to D6) in the triangular facet 1. In this way, a sequence of the vertexes D1, D2, D5, and D6 is determined. Similarly, a sequence of remaining vertices on the side plane may be determined, to obtain the side plane index.

After the proxy model is determined, the proxy model may be further scaled according to specific application. For example, to facilitate collision detection and reduce incorrect judgment that occurs during the collision detection, the proxy model may be appropriately scaled up. For another example, during occlusion culling, the proxy model may be appropriately scaled down, so that a case in which a model that needs to be rendered is determined as a model that does not need to be rendered may be reduced.

In some embodiments, the proxy model may alternatively be superimposed on the corresponding original model. In this way, a scaling ratio, a height, and the like of the proxy model may be adjusted based on a superposition result.

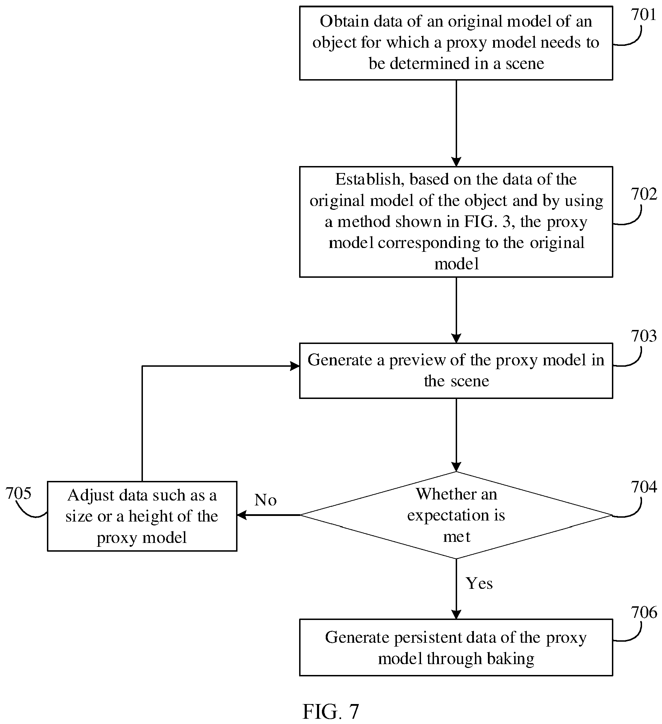

FIG. 7 is a schematic flowchart of an application scenario to which the model establishment method according to this embodiment of this application is applied.

701: Obtain data of an original model of an object (for example, an obstruction) for which a proxy model needs to be determined in a scene.

702: Establish, based on the data of the original model of the object and by using the method shown in FIG. 3, the proxy model corresponding to the original model.

703: Generate a preview of the proxy model in the scene.

704: Determine whether a preview result of the proxy model meets an expectation.

If the expectation is not met, step 705 may be performed; or if the expectation is met, step 706 may be performed.

705: Adjust data such as a size or a height of the proxy model. After the size or the height of the proxy model is adjusted, whether the preview result of the proxy model meets the expectation may continue to be determined. If the preview result still does not meet the expectation, the proxy model may continue to be adjusted until the expectation is met.

In some embodiments, in step 705, in addition to adjusting the size or the height of the proxy model, some thresholds used in a process of generating the proxy model may be adjusted, to regenerate the proxy model. For example, a preset proportion used to determine the to-be-obtained vertexes in step 301 may be adjusted. For another example, the preset angle used to determine the abnormal vertex in step 302 may be adjusted.

706: Generate persistent data of the proxy model through baking, so that the data may be invoked during subsequent running.

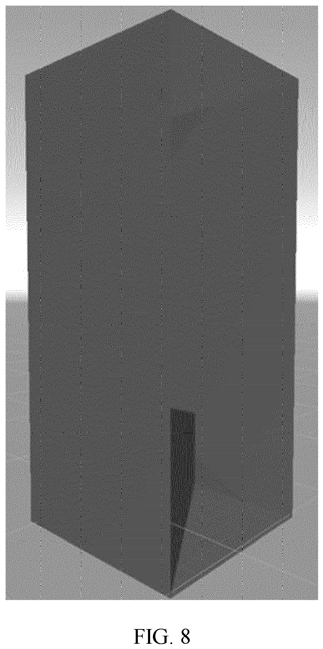

FIG. 8 is a proxy model that corresponds to the original model shown in FIG. 1 and that is generated according to the method shown in FIG. 3. The proxy model shown in FIG. 8 has only 96 vertices and 60 triangular facets. In comparison with quantities of vertices and triangular facets of the original model, quantities of vertices and triangular facets of the proxy model are reduced by about 99.5%. It may be learned that, the proxy model obtained by using the technical solution provided in this application greatly reduces the quantities of vertices and triangular facets, but a conformity degree between the proxy model and the original model is high. In this way, by using the proxy model provided in the technical solutions of this application, a computation amount of an application such as occlusion culling or collision detection may be reduced, application running efficiency may be improved, and user experience may be improved.

Occlusion culling is used as an example. A test is performed in a scenario of a real game case, and an obtained test result is shown in Table 1.

**Table 1**

| Occlusion rate | Frame rate that is obtained by using a default proxy model in the occlusion culling test | Frame rate that is obtained by using the proxy model obtained in this application in the occlusion culling test | Frame rate improvement | Frame rate improvement percentage |
|---|---|---|---|---|
| 90.62% | 61.65 Hz | 71.61 Hz | 9.96 | 16% |
| 69.99% | 61.65 Hz | 66.49 Hz | 4.84 | 8% |
| 50.00% | 66.92 Hz | 68.93 Hz | 2.01 | 3% |
| 30.02% | 72.72 Hz | 73.7 Hz | 0.98 | 1% |
| 10.01% | 61.65 Hz | 63.54 Hz | 1.89 | 3% |

It may be learned from Table 1 that, as the occlusion rate increases, this solution may effectively improve a frame rate during a game is running on the premise that conservative occlusion is ensured, to improve game experience.

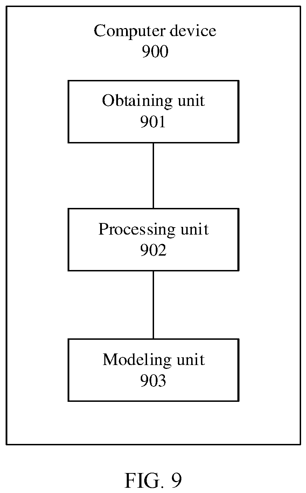

FIG. 9 is a schematic diagram of a computer device according to an embodiment of this application. A computer device 900 shown in FIG. 9 includes an obtaining unit 901, a processing unit 902, and a modeling unit 903.

The obtaining unit 901 is configured to obtain N coordinates, where the N coordinates are respectively projected coordinates of N vertices that are in an original model and that are projected on a target plane, and N is a positive integer greater than or equal to 3.

The processing unit 902 is configured to determine M vertices from the N vertices based on the N coordinates, where M is a positive integer greater than or equal to 3 and less than or equal to N.

The modeling unit 903 is configured to establish, based on the projected coordinates of the M vertices and height information of the original model, a surrogate model corresponding to the original model.

For specific functions and beneficial effect of the obtaining unit 901, the processing unit 902, and the modeling unit 903, refer to descriptions of some of the foregoing method embodiments. For brevity, details are not described herein again.

It should be understood that FIG. 9 is merely an example rather than a limitation. The computer device including the obtaining unit, the processing unit, and the modeling unit may not depend on a structure shown in FIG. 9.

When the computer device 900 is a chip, the chip includes a sending unit and a processing unit. The sending unit may be an input/output circuit or a communication interface. The processing unit is a processor, a microprocessor, or an integrated circuit integrated on the chip.

An embodiment of this application further provides another computer device, including a processor and a memory. The processor may be coupled to the memory, and read and execute instructions and/or program code in the memory, to perform the steps in the foregoing method embodiments.

It should be understood that, the processor may be a chip. For example, the processor may be a field programmable gate array (field programmable gate array, FPGA), an application-specific integrated circuit (application-specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD) or another programmable logic device, a discrete gate or a transistor logic device, a discrete hardware component, or another integrated chip.

In an implementation process, the steps in the foregoing methods may be implemented by using a hardware integrated logic circuit in the processor, or instructions in a form of software. The steps of the method disclosed with reference to embodiments of this application may be directly performed by a hardware processor, or may be performed by a combination of hardware and software modules in the processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in this embodiment of this application may be an integrated circuit chip and has a signal processing capability. In an implementation process, the steps in the foregoing method embodiments may be implemented by using the hardware integrated logic circuit in the processor, or the instructions in the form of software. A general-purpose processor may be a microprocessor, or the processor may be any conventional processor and the like. The steps of the method disclosed with reference to embodiments of this application may be directly performed by a hardware decoding processor, or may be performed by a combination of hardware and software modules in a decoding processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By example but not by limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and the method described in this specification includes but is not limited to these and any memory of another proper type.

According to the method provided in embodiments of this application, this application further provides a computer program product. The computer program product includes computer program code. When the computer program code is run on a computer, the computer is enabled to perform the method in the foregoing embodiments.

According to the method provided in embodiments of this application, this application further provides a computer-readable medium. The computer-readable medium stores program code. When the program code is run on a computer, the computer is enabled to perform the method in the foregoing embodiments.

A person of ordinary skill in the art may be aware that, in combination with examples described in embodiments disclosed in this specification, units and algorithm steps may be implemented by electronic hardware or a combination of computer software and electronic hardware. Whether the functions are performed in a form of hardware or software depends on particular applications and design constraints of the technical solution. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and there may be another manner for division in actual implementation. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between apparatuses or units may be implemented in electronic, mechanical, or other forms.

Units described as separate components may or may not be physically separate. Components displayed as units may or may not be physical units, may be located in one position, or may be distributed on a plurality of network units. Some or all units may be selected based on an actual requirement to achieve the objective of the solutions of embodiments.

In addition, functional units in embodiments of this application may be integrated into one processing unit, or each of the units may physically and separately exist, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to conventional technologies, or a part of the technical solutions may be implemented in a form of a software product. The computer software product is stored in a storage medium and includes several instructions for instructing a computer device (which may be a personal computer, a server, a network device, and the like) to perform all or a part of the steps of the methods described in embodiments of this application. The foregoing storage medium includes any medium that may store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to protection scope of the claims.

## Claims

1. A model establishment method, comprising:
obtaining N coordinates, wherein the N coordinates are projected coordinates of N vertices that are in an original model and that are projected on a target plane, and N is a positive integer greater than or equal to 3;
determining M vertices from the N vertices based on the N coordinates, wherein M is a positive integer greater than or equal to 3 and less than or equal to N; and
establishing, based on projected coordinates of the M vertices and height information of the original model, a proxy model corresponding to the original model.

2. The method according to claim 1, wherein the obtaining N coordinates comprises:
determining a plurality of candidate vertices based on the projected coordinates of the vertices that are comprised in the original model and that are projected on the target plane, wherein projected coordinates of each of the plurality of candidate vertices projected on the target plane are located in a reference area, and the reference area is an area in which a preset proportion of vertices in the original model are projected on the target plane;
determining the N vertices from the plurality of candidate vertices; and
determining the projected coordinates of the N vertices projected on the target plane.

3. The method according to claim 1, wherein determining the N vertices from a plurality of candidate vertices comprises:
determining N groups of candidate vertices based on projected coordinates of each of the plurality of candidate vertices projected on the target plane, wherein each group of candidate vertices in the N groups of candidate vertices comprises at least one vertex, projected coordinates of any two candidate vertices that belong to a same group and that are projected on the target plane are the same, and projected coordinates of any two candidate vertices that belong to different groups and that are projected on the target plane are different; and
determining the N vertices, wherein the N vertices respectively belong to the N groups of candidate vertices.

4. The method according to claim 3, wherein the N vertices are vertices with a maximum coordinate value in a reference direction of the N groups of candidate vertices, and the reference direction is a direction perpendicular to the target plane; and
the height information of the original model is coordinate values of the M vertices in the reference direction.

5. The method according to claim 1 or 2, wherein the height information of the original model is height information of a bounding box, and all vertices in the original model are located in the bounding box.

6. The method according to any one of claims 1 to 5, wherein the determining M vertices from the N vertices based on the N coordinates comprises:
traversing the N vertices based on the N coordinates, and deleting an abnormal vertex from the N vertices to obtain the M vertices, wherein an angle of an included angle between a first reference line and a second reference line is greater than a preset angle, the first reference line is a connection line between the abnormal vertex and a first adjacent point, the second reference line is a connection line between the abnormal vertex and a second adjacent point, and the first adjacent point and the second adjacent point are two vertices that are located on two sides of the abnormal vertex and adjacent to the abnormal vertex in the N vertices.

7. The method according to any one of claims 1 to 6, wherein the establishing, based on projected coordinates of the M vertices and height information of the original model, a proxy model corresponding to the original model comprises:
determining, based on the projected coordinates of the M vertices and the height information of the original model, coordinates of M top vertices located on a top plane of the proxy model and coordinates of M bottom vertices located on a bottom plane of the proxy model; and
determining a vertex index based on the coordinates of the M top vertices and the coordinates of the M bottom vertices, wherein the vertex index is used to record a connection sequence of vertices in the proxy model, and the proxy model comprises the coordinates of the M top vertices, the coordinates of the M bottom vertices, and the vertex index.

8. A computer device, comprising:
an obtaining unit, configured to obtain N coordinates, wherein the N coordinates are projected coordinates of N vertices that are in an original model and that are projected on a target plane, and N is a positive integer greater than or equal to 3;
a processing unit, configured to determine M vertices from the N vertices based on the N coordinates, wherein M is a positive integer greater than or equal to 3 and less than or equal to N; and
a modeling unit, configured to establish, based on projected coordinates of the M vertices and height information of the original model, a surrogate model corresponding to the original model.

9. The computer device according to claim 8, wherein the obtaining unit is specifically configured to: determine a plurality of candidate vertices based on the projected coordinates of the vertices that are comprised in the original model and that are projected on the target plane, determine the N vertices from the plurality of candidate vertices, and determine the projected coordinates of the N vertices projected on the target plane, wherein projected coordinates of each of the plurality of candidate vertices projected on the target plane are located in a reference area, and the reference area is an area in which a preset proportion of vertices in the original model are projected on the target plane.

10. The computer device according to claim 8, wherein the obtaining unit is specifically configured to determine N groups of candidate vertices based on the projected coordinates of each of the plurality of candidate vertices projected on the target plane, wherein each group of candidate vertices in the N groups of candidate vertices comprises at least one vertex, projected coordinates of any two candidate vertices that belong to a same group and that are projected on the target plane are the same, and projected coordinates of any two candidate vertices that belong to different groups and that are projected on the target plane are different; and
determine the N vertices, wherein the N vertices respectively belong to the N groups of candidate vertices.

11. The computer device according to claim 10, wherein the N vertices are vertices with a maximum coordinate value in a reference direction of the N groups of candidate vertices, and the reference direction is a direction perpendicular to the target plane; and
the height information of the original model is coordinate values of the M vertices in the reference direction.

12. The computer device according to claim 8 or 9, wherein the height information of the original model is height information of a bounding box, and all vertices in the original model are located in the bounding box.

13. The computer device according to any one of claims 8 to 12, wherein the processing unit is specifically configured to: traverse the N vertices based on the N coordinates, and delete an abnormal vertex from the N vertices to obtain the M vertices, wherein an angle of an included angle between a first reference line and a second reference line is greater than a preset angle, the first reference line is a connection line between the abnormal vertex and a first adjacent point, the second reference line is a connection line between the abnormal vertex and a second adjacent point, and the first adjacent point and the second adjacent point are two vertices that are located on two sides of the abnormal vertex and adjacent to the abnormal vertex in the N vertices.

14. The computer device according to any one of claims 8 to 13, wherein the processing unit is specifically configured to: determine, based on the projected coordinates of the M vertices and the height information of the original model, coordinates of M top vertices located on a top plane of the proxy model and coordinates of M bottom vertices located on a bottom plane of the proxy model; and
determine a vertex index based on the coordinates of the M top vertices and the coordinates of the M bottom vertices, wherein the vertex index is used to record a connection sequence of vertices in the proxy model, and the proxy model comprises the coordinates of the M top vertices, the coordinates of the M bottom vertices, and the vertex index.

15. A computer device, comprising a processor, wherein the processor is configured to be coupled to a memory, and read and execute instructions and/or program code in the memory, to perform the method according to any one of claims 1 to 7.

16. A chip system, comprising a logic circuit, wherein the logic circuit is configured to be coupled to an input/output interface, and perform data transmission through the input/output interface, to perform the method according to any one of claims 1 to 7.

17. A computer-readable medium, wherein the computer-readable medium stores program code, and when the computer program code is run on a computer, the computer is enabled to perform the method according to any one of claims 1 to 7.
